# EUROPEAN PATENT APPLICATION

(11) **EP 1 406 171 A1**
(43) Date of publication of application: **07.04.2004**
(21) Application number: 02354154.3
(22) Date of filing: 04.10.2002
(51) Int. Cl.: G06F 9/46

(54) **Data processing system and method**

(71) Applicant: Hewlett-Packard Company, Palo Alto, CA 94304 (US)
(72) Inventor: Wieczorek, Philippe, 38330 St Ismier (FR); Kyriakides, Lionel, 38130 Echirolles (FR)
(74) Representative: Lloyd, Richard Graham

(57) **Abstract**

The present invention relates to a data processing system and method and, more particularly, to a RMI system and method in which two RMI registries are provided to support remote object servers and clients in the event of failure of one of the two RMI registries.

## Description

### Field of the Invention

The present invention relates to a data processing system and method and, more particularly, to such a system and method for use in distributed processing.

### Background to the Invention

Remote method invocation (RMI) is a Java mechanism by which an object can invoke the methods of another object that is located on, or accessible by, a different Java virtual machine (JVM) to that on which the invoking object is located. RMI provides a simple and direct mechanism for distributed computing using Java objects. These objects can be intrinsic Java objects or a Java wrapper around an existing API. The Java methods bind, or rebind, and lookup, which are part of the *Naming* class, are used by a server and client respectively to publish and retrieve information relating to objects that are offered by the server for invocation. The server, using bind, or rebind, together with a URL-style host computer identifier and a reference to the object to be published as parameters, forwards these publication details to a RMI Registry, that is, to a Java registry, which is hosted by the host computer. The Java registry can be used by clients to locate publicly accessible objects using the lookup method of the *Naming* class. The lookup method uses the URL-style object name to retrieve a reference to the corresponding object that can be used in a remote invocation of that object. The format of the URL-style reference is as follows "//host name:port/object name". The port may be, for example, port 1099.

When a client needs to invoke a remote object, a stub for that remote object is obtained using the lookup method. This stub forms a proxy for the remote object that can be used by a client application to invoke methods of the remote object.

It will be appreciated that the RMI registry will be unavailable in the event of the server that hosts the RMI registry suffering a fault. Therefore, clients will be unable to obtain an appropriate reference for any remote object that was registered with the RMI registry hosted by the RMI registry host server. This will clearly interfere with the correct running of client applications that depend upon remote objects.

It is an object of the present invention at least to mitigate some of the problems of the prior art.

### Summary of Invention

Accordingly, a first aspect of embodiments of the present invention provides a data processing system comprising an object server to provide access to a remote object, a first object registry for publishing first access data for locating and accessing the remote object via the server, a second object registry for publishing second access data for locating and accessing the remote object via the server; and a client hosting a client application requiring access to the remote object; the client application being arranged to issue a request to receive access data for locating and accessing the remote object; the access data being supplied by at least one of the first and second object registries in the form of at least one of the first or second access data; the object server being arranged to supply the access data to the first and second object registries.

Advantageously, the availability of an RMI registry is unaffected by the failure of one of the RMI registry servers. This follows as a consequence of one of the primary or secondary RMI registry hosts being available.

Preferred embodiments provide a data processing system further comprising an intermediate registry, hosted by an intermediate registry server, for servicing at least one of the request for access data and an access data publication request comprising the access data for locating and providing access to the remote object. The intermediate registry maps the request for access data to two access requests; the two access requests being directed to respective ones of the first and second registries and being in respect of the first and second access data respectively. Preferably, the intermediate registry maps the access data publication request to two access data publication requests; each of the two object access data publication requests being directed to respective ones of the first and second registries and both containing the access data for locating and providing access to the remote object. In preferred embodiments, the first and second access data are derived from the access data for locating and providing access to the remote object.

It will be appreciated that a convenient manner of requesting and publishing the access data would be useful.
Suitably, embodiments provide a data processing system in which the request to receive access data comprises means to invoke a first predetermined instruction arranged to support access to at least one of the first and second object registries and to request at least one of the first and second access data respectively.

The first predetermined instruction is arranged to support access to both the first and second object registries and to request both the first and second access data substantially simultaneously. Preferably, the predetermined instruction is a Java bind instruction modified to provide access to the first and second object registries and to request the first and second access data.

Preferred embodiments provide a data processing system in which the first and second access data are supplied to the first and second registries using a second predetermined instruction. The second predetermined instruction is arranged to supply the first and second access data to the first and second object registries substantially simultaneously. Preferably, the second predetermined instruction is a Java lookup instruction modified to provide the first and second access data to the first and second object registries substantially simultaneously.

It will be appreciated that having both registry servers active concurrently is one way of implementing the invention. However, alternative embodiments provide a data processing system in which the first and second object registries are hosted by first and second servers respectively that are operated in active and stand-by modes so that the request for access data is processed by the first server; the first and second servers comprising means to migrate a communication channel for carrying the request from the first server to the second server in the event of a fault associated with the first server such that the second server services subsequent requests for access data.

Preferably, the published access data is supplied to the first server and mirrored to the second server.

A further aspect of embodiments of the present invention provides a remote object registry system comprising an object server to provide access to an object that can be invoked remotely; at least first and second object registries for publishing access data associated with the object to support remote invocation of that object; and at least one intermediate registry server for responding to requests for the access data associated with the remote object by retrieving that access data from at least one of the first and second object registries.

A still further aspect of embodiments of the present invention provides an intermediate registry server comprising means to receive a request for access data associated with an object accessible via an object server, and, in response to the request, means to request the access data from first and second object registries storing the access data; and means to respond to the request by forwarding the access data returned from at least one of the first and second object registries.

Preferably, the intermediate registry server comprises means to receive a command to post, to at least first and second object registries, access data associated with a remotely accessible object that can be invoked via an object server, and means to instruct both the first and second object registries to store the access data.

Yet another aspect of embodiments of the present invention provides a method for remote object invocation comprising the steps of issuing at least a first request for access data for a remote object to first and second remote object registries hosted by first and second servers; the access data being such as to support invocation, within a first environment, of at least a method of the remote object hosted by or accessible by a second environment; receiving the access data from at least one of the first and second remote object registries; and invoking the method of the remote object via the second environment.

Preferably, embodiments provide a method in which the step of issuing at least the first request comprises the steps of issuing a prior request for access data to an intermediate server that translates the forwards the prior request to first and second requests for that data to the first and second remote object registries respectively.

Some embodiments provide a method further comprising the step of providing a first programming language instruction implementing a post of access data; the instruction comprising first and second parameters representing references to first and second access data accessible via the first and second remote object references respectively.

Preferably, embodiments provide a method in which the step of providing a first programming language instruction comprises the step of modifying an existing programming language instruction implement the request for access data. The step of an existing programming language instruction may comprise the step of modifying a Java bind or rebind instruction to utilise the first and second parameters.

Preferably, embodiments provide a method further comprising the step of providing a second programming language instruction implementing a request for the access data; the instruction comprising first and second parameters representing references to first and second access data accessible via the first and second remote object references respectively. The step of providing a second programming language instruction may comprise the step of modifying an existing programming language instruction implement the request for access data. Preferred embodiments provide a method in which the step of modifying an existing programming language instruction comprises the step of modifying a Java lookup instruction to utilise the first and second parameters.

Embodiments provide a method comprising the steps of reflecting data associated with the first remote object server to the second remote object server; migrating address data associated with the first remote object server to the second remote object server; and directing the access request, originally intended for the first remote object server, to the second remote object server.

Embodiments also provide a computer program element comprising computer program code means for implementing a system or method as described in this specification and a computer program product comprising a computer readable storage medium storing such a computer program element.

### Brief Description of the Drawings

Embodiments of the present invention will now be described, by way of example only, with reference to the accompanying drawings in which:
figure 1 illustrates an RMI system according to the prior art; and
figure 2 to 4 illustrates a number of approaches to implementing RMI systems.

### Detailed Description of Preferred Embodiments

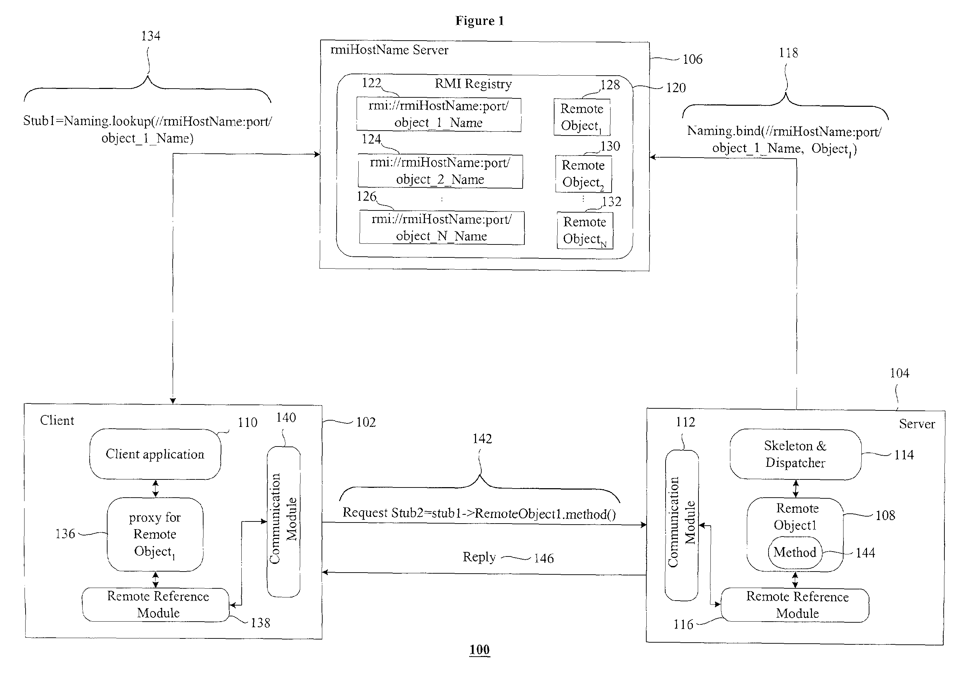

Figure 1 shows a remote method invocation system 100 comprising a client 102, a server 104 and an RMI registry server 106, which interact to allow the client 102 to invoke the methods of objects hosted by the server 104.

The server 104 comprises a remote object 108 that is to be made available for use by client applications such as, for example, a client application 110 running at the client 102. The server 104 also contains a communication module 112 for managing incoming remote method invocation requests and for posting replies to such requests, that is, for posting the results of remote method invocations. The server 104 also contains a skeleton and dispatcher 114 that are used by the communication module and a remote reference module 116 in servicing remote method invocation requests directed to the remote object 108. The server 104 makes the remote object 108 available for public invocation by exporting the object using *super()* and using the *bind* method 118 of the class *Naming.*

The *bind* method is arranged to associate a string URL-style reference with the remote object 108 within a remote method invocation registry 120.

The RMI server 106 hosts the RMI registry 120. The RMI registry 120 contains a number of string URL-style references 122, 124 and 126 that are used by clients to obtain references 128, 130 and 132 to corresponding remote objects.

The client 102, in response to the client application 110 invoking the lookup method, obtains a stub 134 that is used to create a proxy 136 for the remote object 108. The proxy 136 is invoked by the client application 110 in the same manner as that in which the client application 110 would invoke a local object. The proxy 136 uses the remote reference module 138 and the communication module 140 to issue a remote method invocation request 142, which is sent to the server 104.

The stub 134 for the remote object 108 is created using the lookup method of the *Naming* class. The lookup method requires a single parameter, which is the string URL-style reference, such as, for example, names 122, 124 and 126, that corresponds to the object to be invoked. It will be appreciated by one skilled in the art that the URL-style references 122, 124 and 126 of the corresponding objects 128, 130 and 132 are obtained from the RMI registry 120 using the *list()* method of the *Naming* class.

The communication module 112 of the server 104, in response to receiving the request 142 invokes the appropriate method 144 of the remote object 108 using the skeleton and dispatcher 114. The communication module 112 and the remote reference module 116 marshal the response of the remote method invocation into a reply 146. The reply 146 is routed to the client application 110 via the communication module 140, the remote reference module 138 and the proxy 136 for the remote object.

It can be appreciated from the above that the RMI registry 120 plays a pivotal role in supporting remote method invocation. Therefore, if the RMI registry is unavailable for whatever reason, the remote method invocation system would be unable to function correctly. This has the consequence that the client application 110 will receive *Exceptions* when attempting to invoke remote objects for which the server 106 hosted corresponding references.

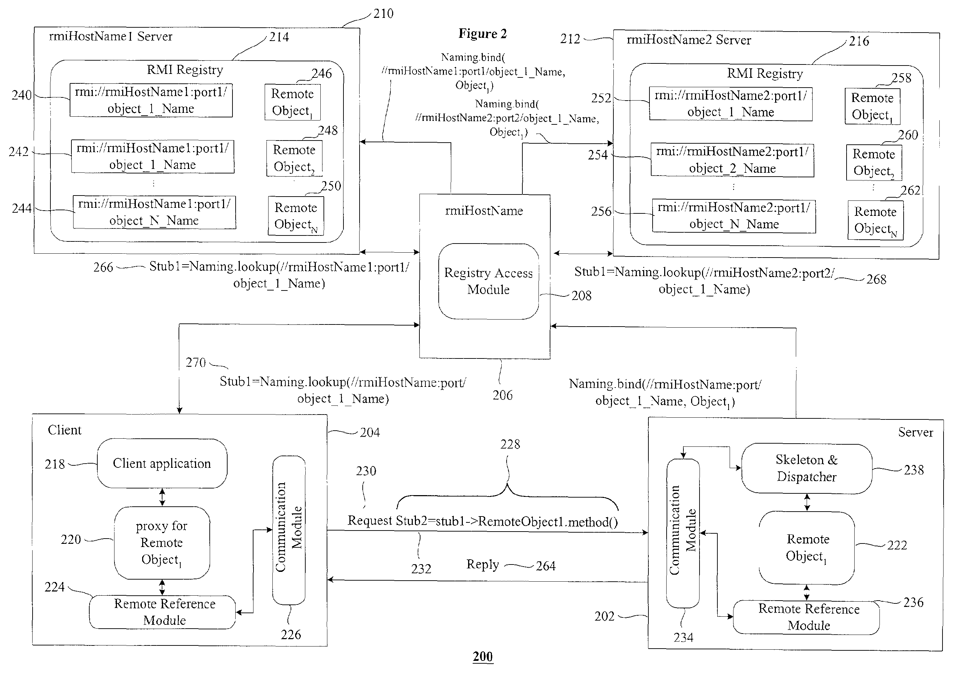

Referring to figure 2, there is shown a remote method invocation system 200. Within the RMI invocation system 200 it will be appreciated that the server 202 and the client 204 comprise substantially the same elements as those described in relation to the server 104 and client 102 of figure 1. The server 202 and client 204, together with their various respective elements, interact and operate in the same way as those described with reference to figure 1 but for the interaction with the RMI registry. The RMI registry 106 of the prior art is replaced with an intermediate RMI registry 206. The intermediate RMI registry contains a registry access module 208, which maps any incoming requests for, or commands to, a primary RMI registry server 210 and a secondary RMI registry server 212. The primary 210 and secondary 212 registry servers host corresponding RMI registries 214 and 216. It will be appreciated that the server 202 forms an object server.

The primary 214 and secondary 216 RMI registries store identical RMI registry information such that the secondary RMI registry 216 can act as a back-up for the primary RMI registry 214 and visa versa.

The intermediate RMI registry 206 is arranged to map all bind method invocations and all lookup method invocations, received from the server 202 and the client 204 to both the primary 214 and secondary 216 RMI registries. It can be appreciated that the primary 214 and secondary 216 registries contain exactly the same string URL-style remote object references as those described with reference to figure 1. Similarly, each of the primary 214 and secondary 216 RMI registries contain remote object references that correspond to the string URL-style references.

In response to the server issuing or invoking a *Naming.bind(String* //*rmiHostName:Port*/*object_1_Name,Remote Object*_{*1*}*)* method, the intermediate RMI registry 206 maps the bind invocation to first and second bind invocations that are directed to the primary RMI server 210 and the secondary RMI server 212 respectively. Therefore, it can be appreciated that the method invocation
*Naming.bind (String* //*rmiHostName:Port*/*object_1_Name,Remote Object*_{*1*}*)*
is mapped to
*Naming.bind(String* //*rmiHostName1:Port1*/*object*_*1_Name,Remote Object*_{*1*}*)*
and
*Naming.bind(String* //*rmiHostName2:Port2*/*object_1_Name,Remote Objects*_{*1*}*)*.

The client 204 comprises a client application 218, which can invoke, or instigate the invocation of, methods of a proxy 220 for the remote object 222 hosted by the server 202. The proxy 220 for the remote object 222, in conjunction with a remote reference module 224 and the communication module 226, forwards the invocation 228 in a request 230 that is conveyed by a suitable transport mechanism 232 such as, for example, TCP or UDP.

The communication module 226 implements a request-reply protocol as well as providing specified invocation semantics. On the server-side, the communication module also selects the skeleton and dispatcher for the class of object to be invoked.

The remote reference modules 224 and 236 translate between local and remote object references when a remote object reference arrives in a request or a reply message, or creates remote object references, or when a remote object is to be passed as an argument or result for the first time. The remote reference modules use a remote object table (not shown) to achieve the above.

The server 202, as well as comprising the remote object 222, also has a communication module 234 and a remote reference module 236 as well as a skeleton and dispatcher 238. A skeleton and dispatcher is provided for each class representing a remote object. The skeleton classes implement the methods contained in the proxy for the remote object 222.

The primary RMI registry 210 contains string URL-style references 240, 242 and 244 that correspond to respective remote object references 246, 248 and 250. It will be appreciated that the remote object references represent access data for locating and providing access to respective remote objects from the perspective of the server and client. The access data, from the perspective of the server publishing that data, also comprises the corresponding URL-style reference.

The secondary RMI host 212 also contains string URL-style references 252, 254 and 256 which correspond to respective remote object references 258, 260 and 262. With the exception of the intermediate RMI registry 206, the elements shown in the RMI system 200 perform corresponding functions to those that are also shown in figure 1.

The server, 202 in response to having received and given effect to the remote invocation 228, constructs a reply 264 using the communication module 234.

Although the above has been described with reference to the server holding out a single remote object 222 for public access, the system is not limited to such an arrangement. The server could equally well host other remote objects such as, for example, remote objects (not shown) that correspond to the remote object references 248 and 250 or 260 and 262.

It can be appreciated that the primary 210 and secondary 212 RMI registry servers are arranged to respond to the bind invocations in the conventional manner and are arranged, in response to lookup invocations, to supply an appropriate one of the remote object references to the intermediate RMI registry server 206.

The registry access module 208 is arranged to map the first stub of the two stubs 266 and 268, received from the primary 214 and secondary 216 RMI registries, to the lookup invocation 270 received from the client 204. It will be appreciated that it is assumed that the first stub returned is the correct stub. In this way, if one of the RMI registries 214 and 216, or the corresponding servers 210 and 212, fails, the other registry and server are available to service the needs of the client 204.

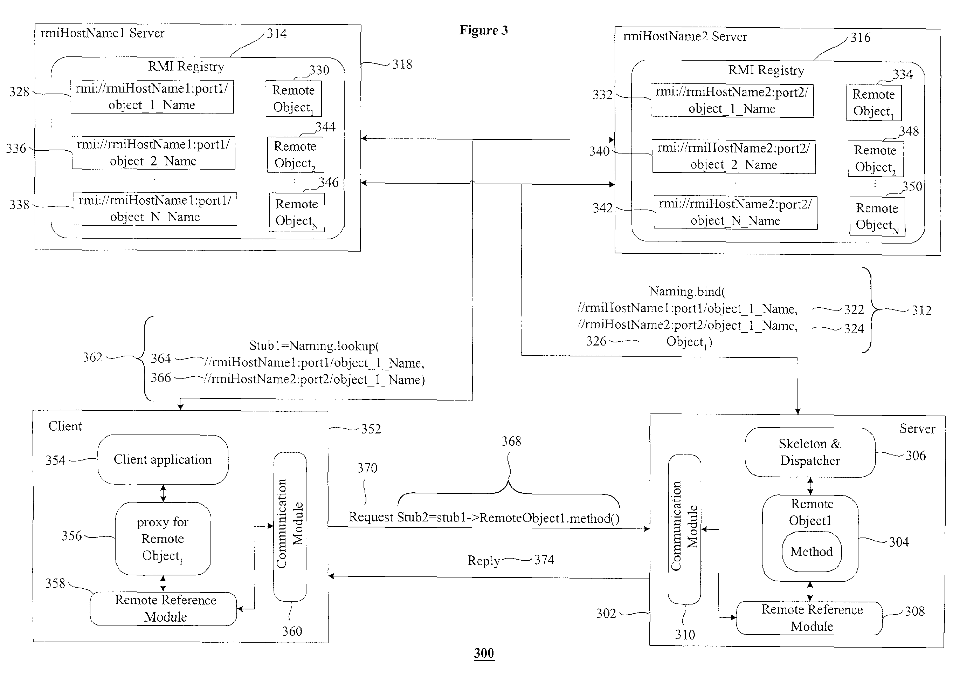

Figure 3 shows an RMI system 300. The system 300 comprises a server 302 having a remote object 304, a corresponding skeleton and dispatcher 306, a remote reference module 308 and a communication module 310. The server 302 and the elements it contains operate in substantially the same manner as described above with reference to figure 2 with the exception that a single bind method 312 is modified to direct the bind request to first 314 and second 316 RMI registries that are hosted by respective RMI registry servers 318 and 320.

The bind method 312 comprises two string URL-style references 322 and 324; one for each of the first 314 and second 316 RMI registries respectively. The bind method 312 also contains the remote object reference 326 to be mapped to the string URL-style references 322 and 324.

The first RMI registry 314 contains a copy 328 of the first string URL-style reference 322 and a corresponding copy 330 of the remote object reference 326. Similarly, the second RMI registry 316 contains a copy 332 of the second string URL-style reference 324. For illustrative purposes only, the first 314 and second 316 RMI registries are also shown as containing further string URL-style references 336, 338, 340 and 342 that correspond to respective remote object references 344, 346, 348 and 350.

The RMI system 300 also comprises a client 352. The client 352 comprises a client application 354, a proxy 356 for the remote object 304 together with a remote reference module 358 and a communication module 360. The client 352 and its various elements operate substantially as described above with reference to figure 2 with the exception of the implementation of the lookup method 362 of the *Naming* class. By analogy with the bind method 312, the lookup method 362 is arranged to be directed to both the first 314 and second 316 RMI registries and contains two string URL-style references 364 and 366; one for each of the RMI registries 314 and 316.

In response to receiving the lookup method invocation 362, the first 314 and second 316 RMI registries respond by returning the corresponding remote object reference 330 and 334 to the client application 354. The client application 354 uses the first stub received from the RMI registries 314 and 316 as the proxy 356 for the remote object 304.

Having received the proxy 356 for the remote object 304, the client application 354 can invoke the methods of the remote object 304 by invoking the corresponding methods of the proxy 356. Any such invocation 368 is directed, via the remote reference module 358 and the communication module 360, in a corresponding request 370 to the server 302. At the server 302, the communication module 310 identifies the appropriate dispatcher and skeleton 306 for the remote object 304, which, in turn, arrange for the appropriate method 372 of the remote object 304 to be invoked.

Having invoked the appropriate method of the remote object 304, the result of the invocation is returned to the client application, via the communication module 360, the remote reference module 358 and the proxy 356, in a reply 374.

Again, it can be appreciated that having two registries 314 and 316 that operate in parallel, and by using the first stub returned from those registries, a more reliable RMI system 300 can be realised.

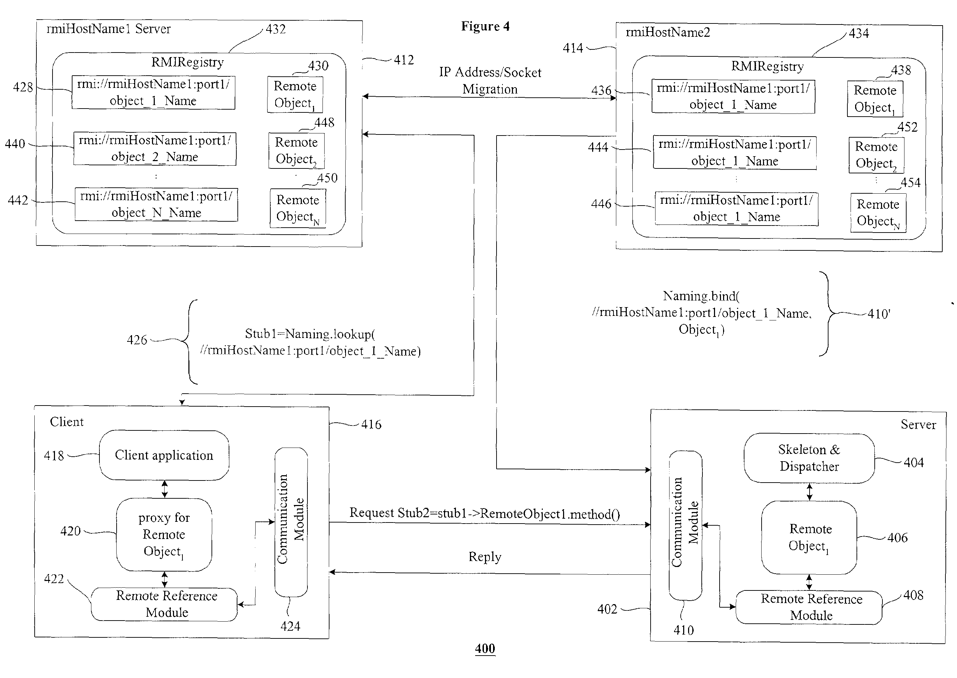

Referring to figure 4, there is shown a preferred form of an RMI system 400. The system 400 comprises a server 402 that has a skeleton and dispatcher 404, a corresponding remote object 406 together with a remote reference module 408 and communication module 410. The server 402 and its various elements 404 to 410 operate substantially as described above with reference to figure 2 with the exception that the bind method is directed to one of a pair of RMI registry servers 412 and 414 that are operated in active and stand-by modes.

The RMI system 400 also comprises a client 416 hosting a client application 418, a proxy 420 for the remote object 406, a remote reference module 422 and a communication module 424. The client 416, together with its various elements 418 to 424, operate in substantially the same manner as described above with reference to figure 2, again, with the exception that the lookup method 426 is directed to an active one of the pair 412 and 414 of RMI registry servers rather than to the intermediate RMI registry server 206 of figure 2.

Assuming that the first RMI server 412 is the active server and the second RMI server 414 is the stand-by server, the bind 410' and the lookup 426 methods will be directed to the first RMI server 412. The first RMI server 412, in response to receiving the bind method invocation 410', from the server 402, creates a string URL-style reference 428 and a corresponding remote object reference 430 within a RMI registry 432. The first 412 and second 414 RMI registries are arranged so that any data created and stored within the first registry server 412 is duplicated to, or copied by, the second RMI server 414. Therefore, the second RMI server 414 has a corresponding RMI registry 434 with a string URL-style object reference 436 that mirrors the URL-style object reference 428 of the first RMI registry 432 and a remote object reference 438 that mirrors the corresponding remote object reference 430 of the first RMI registry 432.

For the purposes of illustration, the first 432 and second 434 registries are shown as containing other string URL-style references 440, 442, 444 and 446, which correspond to remote object references 448, 450, 452 and 454 respectively for other remote objects (not shown).

The active and stand-by servers 412 and 414 are arranged to implement IP address and socket migration in anticipation of the possible failure of the active RMI server 412. The IP addresses and sockets associated with the active RMI server 412 are migrated to the stand-by server 414 in the event of failure of the active RMI server 412. The result of this migration is that the bind and lookup method invocations that were directed to the active server 412 will be redirected automatically to the stand-by server 414. In effect, the stand by server 414 assumes the role of active server in the event of failure of the previously active server 412 in a manner that is completely transparent to the remote object server 402 and client 416. Therefore, rather than the previously active server 412 returning the stub to the client 416 in response to receipt of a lookup method invocation from the client, the newly active server 416, or more accurately, the newly active RMI registry 434 will return the appropriate stub.

Again, it will be appreciated that the client application 418 will be capable of being executed and be capable of using the methods of the remote object 406 even in the event of failure of the first RMI registry 432 since the second RMI registry 434 assumes responsibility.

IP address and socket migration is described in, for example, European patent application no. 01410140.6 and US serial no. 09/777,609 (HP references 50011683 and 5006848) in the name of Hewlett Packard and US 6,049,825, which are all incorporated herein for all purposes by reference.

It will be appreciated that the above embodiments have been described within a Java RMI context. However, embodiments are not limited to such a context. Embodiments can be realised that use some other form of remote object invocation architecture. For example, the Common Object Request Broker Architecture (CORBA) could equally well be used to realise a remote object or method invocation system. Within CORBA, interface definitions for objects are accessible via an Object Request Broker (ORB), that is, the ORB provides distributed access to a collection of objects using the objects' publicly defined interfaces as specified in Object Management Group's Interface Definition Language. An Interface Repository provides for the storage, distribution, and management of a collection of related objects' interface definitions. Therefore, the access data may correspond to the interface definitions within a CORBA context.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising an object server to provide access to a remote object, a first object registry for publishing first access data for locating and accessing the remote object via the server, a second object registry for publishing second access data for locating and accessing the remote object via the server; and a client hosting a client application requiring access to the remote object; the client application being arranged to issue a request to receive access data for locating and accessing the remote object; the access data being supplied by at least one of the first and second object registries in the form of at least one of the first or second access data; the object server being arranged to supply the access data to the first and second object registries.

2. A data processing system as claimed in claim 1, further comprising an intermediate registry, hosted by an intermediate registry server, for servicing at least one of the request for access data and an access data publication request comprising the access data for locating and providing access to the remote object.

3. A data processing system as claimed in claim 2, in which the intermediate registry maps the request for access data to two access requests; the two access requests being directed to respective ones of the first and second registries and being in respect of the first and second access data respectively.

4. A data processing system as claimed in either of claims 2 and 3, in which the intermediate registry maps the access data publication request to two access data publication requests; each of the two object access data publication requests being directed to respective ones of the first and second registries and both containing the access data for locating and providing access to the remote object.

5. A data processing system as claimed in claim 4, in which the first and second access data are derived from the access data for locating and providing access to the remote object.

6. A data processing system as claimed in any preceding claim, in which the request to receive access data comprises means to invoke a first predetermined instruction arranged to support access to at least one of the first and second object registries and to request at least one of the first and second access data respectively.

7. A data processing system as claimed in claim 6, in which the first predetermined instruction is arranged to support access to both the first and second object registries and to request both the first and second access data substantially simultaneously.

8. A data processing system as claimed in claim 7, in which the predetermined instruction is a Java bind instruction modified to provide access to the first and second object registries and to request the first and second access data.

9. A data processing system as claimed in any preceding claim, in which the first and second access data are supplied to the first and second registries using a second predetermined instruction.

10. A data processing system as claimed in claim 9, in which the second predetermined instruction is arranged to supply the first and second access data to the first and second object registries substantially simultaneously.

11. A data processing system as claimed in claim 10, in which the second predetermined instruction is a Java lookup instruction modified to provide the first and second access data to the first and second object registries substantially simultaneously.

12. A data processing system as claimed in any preceding claim, in which the first and second object registries are hosted by first and second servers respectively that are operated in active and stand-by modes so that the request for access data is processed by the first server; the first and second servers comprising means to migrate a communication channel for carrying the request from the first server to the second server in the event of a fault associated with the first server such that the second server services subsequent requests for access data.

13. A data processing system as claimed in claim 12, in which the published access data is supplied to the first server and mirrored to the second server.

14. A client for a system as claimed in any preceding claim.

15. An object server for a system as claimed in any preceding claim.

16. An intermediate registry server for a system as claimed in any preceding claim.

17. A remote object registry system comprising an object server to provide access to an object that can be invoked remotely; at least first and second object registries for publishing access data associated with the object to support remote invocation of that object; and at least one intermediate registry server for responding to requests for the access data associated with the remote object by retrieving that access data from at least one of the first and second object registries.

18. An intermediate registry server comprising means to receive a request for access data associated with an object accessible via an object server, and, in response to the request, means to request the access data from first and second object registries storing the access data; and means to respond to the request by forwarding the access data returned from at least one of the first and second object registries.

19. An intermediate registry server comprising means to receive a command to post, to at least first and second object registries, access data associated with a remotely accessible object that can be invoked via an object server, and means to instruct both the first and second object registries to store the access data.

20. A method for remote object invocation comprising the steps of issuing at least a first request for access data for a remote object to first and second remote object registries hosted by first and second servers; the access data being such as to support invocation, within a first environment, of at least a method of the remote object hosted by or accessible by a second environment; receiving the access data from at least one of the first and second remote object registries; and invoking the method of the remote object via the second environment.

21. A method as claimed in claim 20, in which the step of issuing at least the first request comprises the steps of issuing a prior request for access data to an intermediate server that translates the forwards the prior request to first and second requests for that data to the first and second remote object registries respectively.

22. A method as claimed in either of claims 20 and 21 further comprising the step of providing a first programming language instruction implementing a post of access data; the instruction comprising first and second parameters representing references to first and second access data accessible via the first and second remote object references respectively.

23. A method as claimed in claim 22 in which the step of providing a first programming language instruction comprises the step of modifying an existing programming language instruction implement the request for access data.

24. A method as claimed in claim 23 in which the step of modifying an existing programming language instruction comprises the step of modifying a Java bind or rebind instruction to utilise the first and second parameters.

25. A method as claimed in any of claims 20 to 24, further comprising the step of providing a second programming language instruction implementing a request for the access data; the instruction comprising first and second parameters representing references to first and second access data accessible via the first and second remote object references respectively.

26. A method as claimed in claim 25 in which the step of providing a second programming language instruction comprises the step of modifying an existing programming language instruction implement the request for access data.

27. A method as claimed in claim 26 in which the step of modifying an existing programming language instruction comprises the step of modifying a Java lookup instruction to utilise the first and second parameters.

28. A method as claimed in any of claims 20 to 27, further comprising the steps of reflecting data associated with the first remote object server to the second remote object server; migrating address data associated with the first remote object server to the second remote object server; and directing the access request, originally intended for the first remote object server, to the second remote object server.

29. A computer program element comprising computer program code means for implementing a system or method as claimed in any preceding claim.

30. A computer program product comprising a computer readable storage medium storing a computer program element as claimed in claim 29.
